# EUROPEAN PATENT SPECIFICATION

(11) **EP 2 108 249 B1**
(45) Date of publication and mention of the grant of the patent: **16.03.2011**
(21) Application number: 09386009.6
(22) Date of filing: 08.04.2009
(51) Int. Cl.: A01G 1/00, E01C 13/08, E04D 11/00

(54) **Element for planting surfaces**
Element für Pflanzflächen
Élément pour surfaces plantées

(30) Priority: 08.04.2008 GR 20080100235
(43) Date of publication of application: 14.10.2009
(73) Proprietor: S. Marselos - S. Andreou E.E., 16674 Athens (GR)
(72) Inventor: Sotirios, Marselos, 16674 Glyfada Attikis (GR); Stylianos, Andreou, 17676 Kallithea Attikis (GR); Apostolos, Marselos, 19005 N. Makri Attikis (GR); Michael, Marcelos, 15676 Thrakomakedones Attikis (GR)

(56) References cited:
- DE-A1- 4 107 511
- JP-A- 2002 101 755
- JP-A- 2003 158 923
- JP-A- 2003 299 409
- JP-A- 2008 017 732
- US-A1- 2008 034 654
- US-B1- 6 606 823

## Description

The invention concerns an element for planting surfaces that consists of an elastic square base made out of recycled cold rubber within which various plant material can be placed, see e.g. document JP 2008017732.

No equivalent technique exists so far. In general, planting of hard surfaces (terraces, balconies etc) is currently achieved either by applying uniform insulation and planting on a given space (with the use of multiple insulation materials) or by lining up in various distances among each other flowerpots or other planting vessels. The aforementioned techniques present severe problems as regards the induced weight, the drainage, the insulation against moisture, the potential for creating flexible and all weather resistant surfaces as well as the accessibility to planted spaces.

The invention as claimed in claim 1 is intended to remedy these drawbacks. Preferred features of the invention are set out in the dependent claim.

The use of the proposed element for planting surfaces renders attainable the plant cover of a given space together with the manifold landscape surface design. This is achieved due to the potential for accurate connection of each element with its neighbour one(s). Each element bears a circular protruding part on each of the two adjoining external sides and recesses on the relevant vis-à-vis sides. When connecting the elements, these are accurately fastened among each other creating larger unified surfaces. This attribute allows wide landscape designing according to the number of the elements used. The material presents connection stability and potential for adaptation in probable subbase surface anomalies due to its flexibility. Moreover, it succeeds to maintain the existing drainage since its lower part is formed out of multiple small semi-circular protrusions, which allow intermediate water flow as well as continuous ventilation of the covered surface. Additionally, the invention is characterised by strong resistance of the material to weather conditions, to hits and external weight. These attributes allow its application regardless of the weather conditions as well as the final usage of the planted surfaces. The use of the element, apart from the potential for planting a wide variety of plants, offers thermal insulation on the covered surfaces. Furthermore, it favours the restrain of substantial quantity of water, a fact that increases flood prevention of the covered spaces.

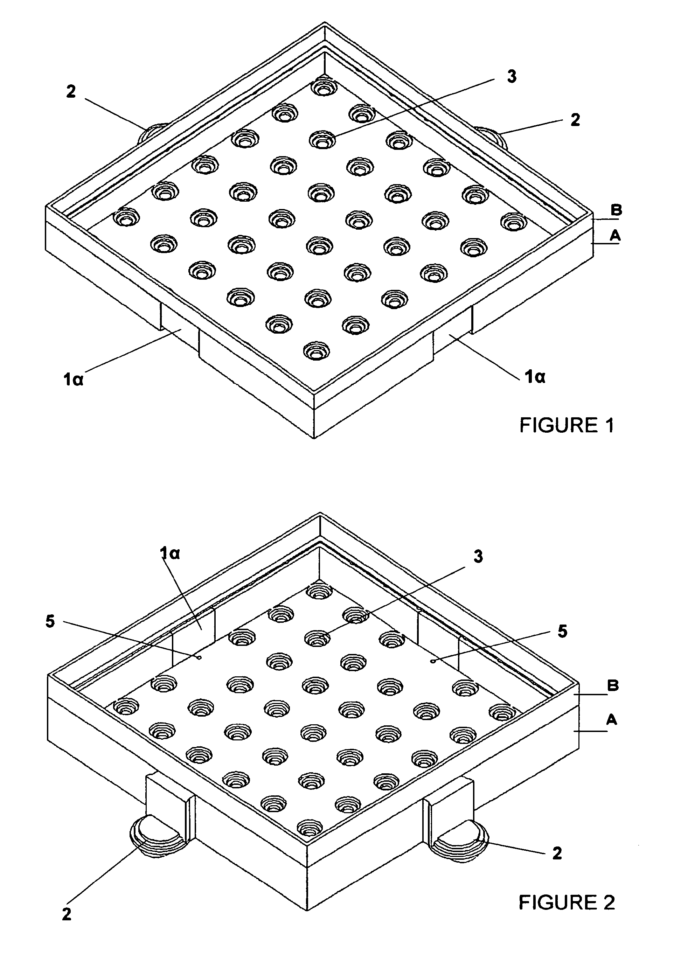

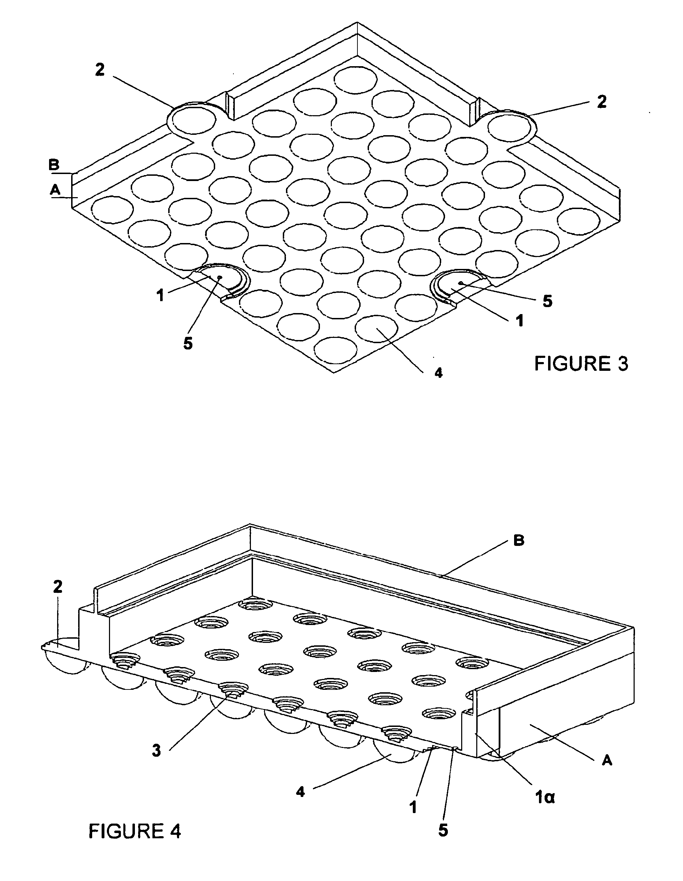

Figures 1, 2, 3 present three-dimensional views of the element for planting surfaces.
Figure 4 depicts in three dimensions a structural section of the element for planting surfaces.

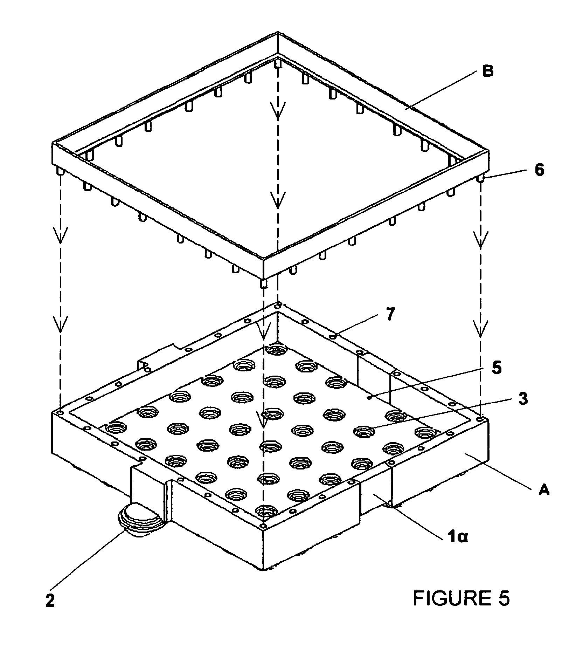

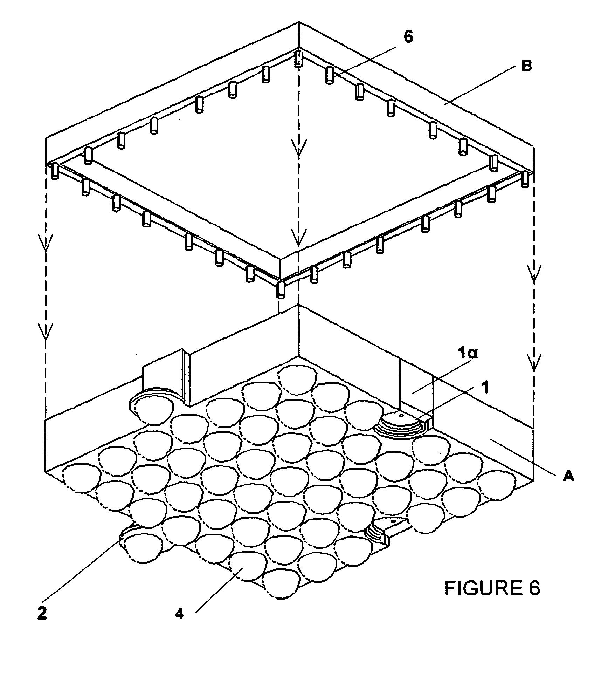

Figures 5 and 6 show three-dimensional views of the connection between the two composing parts of the element for planting surfaces.

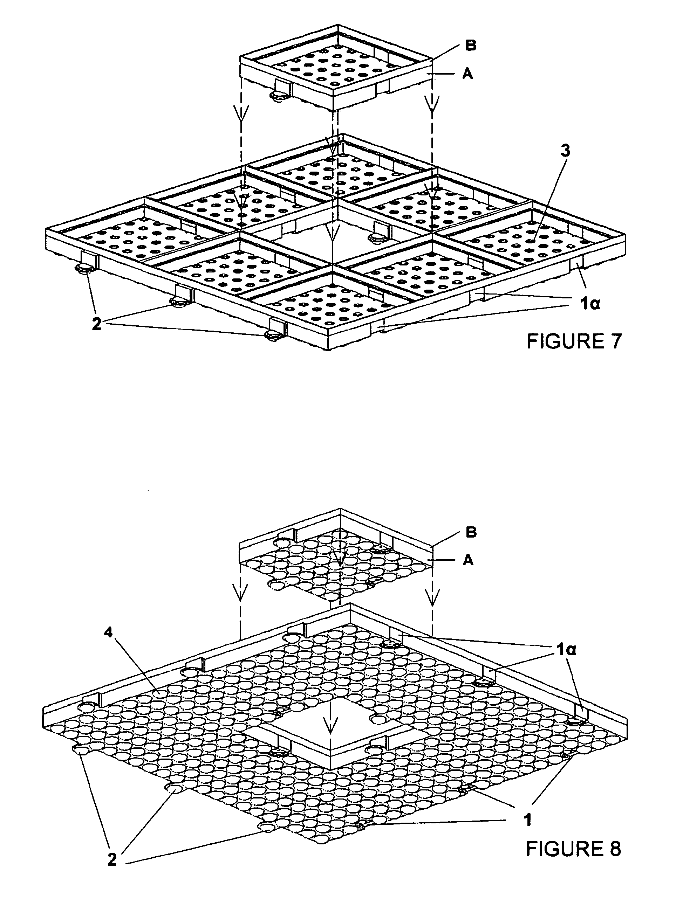

Figures 7 and 8 show a three-dimensional view of the accurate connection between multiple elements for planting surfaces for creating a wider unified surface.

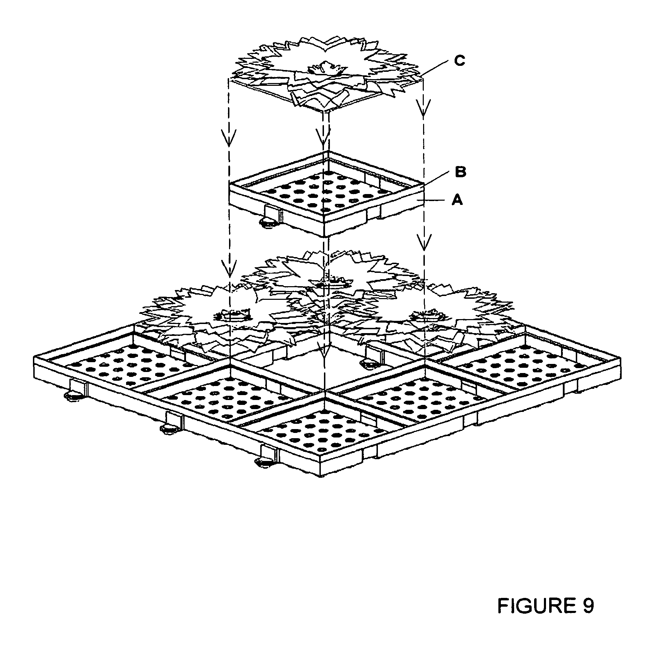

Figure 9 depicts in three dimensions the placement mode and the final view (planting) of the covered surface.

The element for planting surfaces consists of two parts: the base (A) and the rim (B). The planting material (C) is placed within the element. The base (A) is constructed out of recycled cold rubber and polyurethane with thermal vulcanization under pressure. The base (A) bears a circular protruding part (2) on each of the two adjoining external sides and recesses (1) on the relevant vis-à-vis sides, so as to achieve accurate connection between different elements. The recesses (1) are covered with a detaching piece (1a), made out of the same material, which is subtracted before connection and reassures the completion of the structure in case this side happens to represent an external part of the whole covered surface. The internal part of the base (A) is formed in relief with small hemispherical recesses (3) scattered homogeneously. These enable better application of the planting material (C). The external bottom part of the base (A) is also configured in relief with hemispherical protrusions (4) scattered homogeneously. This configuration secures balanced distribution of weight on the covered surface, better adjustment to probable substratum anomalies, preservation of the existing drainage and continuous ventilation of the covered surface as well as maximum protection against moisture. Moreover, prevision has been taken for the placement of a drainage hole (5) on the base (A), whose diameter depends on the needs of the planting material (C) used in each case. Finally, on the top part of the base (A) there are also holes (7), which are set peripherally for the adjustment of the rim (B).

The rim (B), made of synthetic rubber, adjusts to the base (A) of the structure by fixing its rubber extrusions (6) in the corresponding holes (7) of the base (A). Among the characteristics of the rim are high flexibility and minimum breadth.

Finally, the planting material (C) is either placed separately in each element before covering the surfaces or after the application of multiple elements on the surfaces to be covered. The planting material regards succulents, perennial and aromatic shrubs and herbs, ground covering plants and grasses and low shrubs.

## Claims

1. An element for planting surfaces consisting of two parts, a square base (A) and a rim (B) wherein:
- the base (A) presents an internal part or surface and an external bottom part;
- the base (A) bears two internal holes (5) opened on the internal surface of the base (A);
- the rim (B) presents extrusions (6) and adjusts to the base (A) by fixing its extrusions (6) in corresponding holes (7) of the base (A);
- planting material (C) is placed within the element;
**characterized in that**:
- the base (A) bears a circular protruding part (2) on each of two adjoining external sides and recesses (1) on the relevant vis-à-vis sides, so as to achieve accurate connection between different elements, the connection being achieved by a subtracting part (1a) of the recesses, the accurate connection of the protruding parts of an element with the corresponding recesses of its neighbouring one(s) leading to the formation of a unified surface and the successive connection of multiple elements making it possible to cover surfaces of any shape and size;
- the external bottom part of the base (A) of the element is configured in relief with hemispherical protrusions (4) scattered homogeneously, this configuration securing balanced distribution of weight on the covered surface, better adjustment to probable substratum anomalies, preservation of the existing drainage and continuous ventilation of the covered surface as well as maximum protection against moisture;
- the internal part of the base (A) is also formed in relief with small hemispherical recesses (3) scattered homogeneously, enabling water maintenance and anchoring of the plant material (C) roots;
- the degree of drainage of each element depends on the diameter of the two internal holes (5);
- the base (A) is elastic and made out of recycled cold rubber and polyurethane, its configuration being done through thermal vulcanization under pressure;
- the extrusions are rubber extrusions;
- the rim (B) is made out of synthetic rubber and among its characteristics are high flexibility and minimum breadth;
- the element for planting surfaces in accordance to the attributes of its construction materials presents high resistance to weather conditions, hits and heavy loads.

2. The element for planting surfaces of claim 1, further **characterized in that**:
- the element may be placed in any surface, either horizontal or sloping
- after the placement of the elements and in accordance to the planting material used the planting space created is either accessible or not;
- the setting of the rubber rim increases the volume capacity of the element as regards the planting material;
- the element for planting surfaces is used for growing a variety of plant material: succulents perennial and aromatic shrubs and herbs, ground covering piants and grasses and low shrubs.

## Patentansprüche

1. : Ein Bestandteil für die Bepflanzung von Oberflächen, der aus zwei Teilen besteht, eine quadratische Basis (A) und einen Rand (B) wo:
- die Basis (A) über einen inneren Teil oder Oberfläche und einen äußeren Unterboden verfügt;
- die Basis (A) über zwei innere Löcher (5) auf der inneren Oberfläche der Basis (A) verfügt;
- der Rand (B) über extrusions (6) verfügt und auf den Boden (a) durch die Fixierung der extrusions (6) in die entsprechenden Löcher (7) des Bodens (A) passt;
- Pflanzmaterial (C) in den Bestandteil positioniert wird;
Charakterisiert indem:
- der Boden (A) über einen kreisförmigen vorstehenden Teil (2) auf jedem von zwei nebenstehenden äußeren Seiten und Aushöhlungen (1) auf den entsprechenden gegenseitigen Seiten verfügt, zu der genauen Verbindung der unterschiedlichen Bestandteile. Die Verbindung erfolgt durch einen subtracting Teil (1a) der Aushöhlungen und die passgenaue Verbindung der vorstehenden Teile eines Bestandteils mit den entsprechenden Aushöhlungen des nächsten Bestandteils. Dadurch ergibt sich eine vereinheitlichte Oberfläche und die aufeinanderfolgende Verbindung von mehreren Bestandteilen, die die Abdeckung von Oberflächen veschiedener Formen und Größen möglich macht;
- der äußere Unterboden der Basis (A) des Bestandteils ist in Relief mit halbkugelförmigen protrusions konfiguriert, die gleichmäßig verteilt sind, sodass die gleichmäßige Verteilung des Gewichts auf der abgedeckten Oberfläche, die bessere Anpassung bei Unregelmäßigkeiten des Substrats, die Erhaltung des vorhandenen Verrohrungssystems, die kontinuierliche Belüftung der abgedeckten Oberfläche, sowie der maximale Schutz gegen Feuchtigkeit sichert.
- der innere Teil des Bodens (A) ist ebenso in Relief mit kleinen halbkugelförmigen Aushöhlungen (3) geformt, die für die Erhaltung des Wassers und die Verankerung der Wurzeln (C) gleichmäßig verteilt sind;
- der Grad des Abflusses jedes Bestandteils hängt vom Durchmesser der beiden inneren Löcher ab (5);
- der Boden (A) ist aus Kaltpolymerisat und Polyurethane produziert. Die Konfiguration ist aus thermal vulcanization under pressure entstanden;
- die extrusions aus Kautschuk sind;
- der Rand (B) ist aus synthetischem Kautschuk hergestellt und zu seinen Eigenschaften zählt die hohe Flexibilität und minimale Breite;
- der Bestandteil für die Bepflanzung von Oberflächen, in Zusammenhang mit den Eigenschaften seiner Herstellungsmaterialien, über eine große Resistenz gegen Wetterbedingungen, Schläge und Gewichtsbelastung verfügt.

2. : Der Bestandteil für die Bepflanzung von Oberflächen of claim 1, weiter charakterisiert indem:
- der Bestandteil auf jeder Oberfläche darf entweder waagerecht oder geneigt positioniert werden;
- nach der Platzierung der Bestandteile und in Zusammenhang mit dem verwendeten Pflanzmaterial, ist der bepflanzte Raum entweder betretbar oder nicht;
- die Abstimmung des Randes in Zusammenhang mit dem Pflanzmaterial, erhöht die Volumenkapazität des Bestandteils;
- der Bestandteil für die Bepflanzung von Oberflächen darf für die Bepflanzung unterschiedlichen Pflanzen verwendet werden: Saftpflanzen, mehrjährigen und aromatischen Sträuchern und Kräutern, Bodenpflanzen und Grass und niedrigen Sträuchern.

## Revendications

1. : Un élément pour les surfaces plantées en deux parts, une base (A) et un châssis (B), plus précisement:
- La base (A) consiste d' une surface intérieure du fond et une surface exterière qui s'appuie sur le plancher;
- La base (A) a deux trous (5) qu' on ouvre au fond;
- Le châssis (B) a des ressauts (6) qui boutonnent dans des trous correspondants (7) de la base (A);
- Matériels de plantation (c) posés dans l'élément ;
Caractéristiques speciaux:
- La base porte à chaque de deux cotés successives une saillie circulaire (2) qui boutonnent a deux encastrements circulaires (1) respectives des éléments voisins, pour qu' on arrive à connecter avec précision ces élélemnts. On arrive à cette connection en enlevant un parapet (1a) de chaque encastrement et en mettant chaque saillie dans l'encastrement correspondant de l'élément voisin. Comme - ça on arrive à couvrir chaque surface donnée ainsi qu' à former toute sorte de composition desirable.
- La surface extérieure de la base (A) d' un élément est formée en relief avec des ressauts hémisphairiques (4) distribués régulièrement et cette formation assure une distribution régulière des poids sur la surface couvrée, meilleur ajustement sur les probables anomalies de la surface du plancher, préservation du drainage existé, ventilation continuelle de la surface couvrée, donc une protection maximale contre l'humidité du plancher.
- La surface intérieure de la base (A) est aussi formée en relief avec des encastrements hémisphairiques (3) distribués régulièrement en fait d' avoir de petites réserves d' eau, et un ancrage des racines et du materiel de plantation (c).
- Le degré du drainage de chaque élément, dépend de la mesure de deux trous du fond de la base (5).
- La base (A) est fabriquée de néoprène froid récyclé avec polyurethane, formée par vulcanization thermique sous pression;
- Les ressauts (G) sont de néoprène ;
- Le châssis (B) est de néoprène et entre les autres caractéristiques on a une grande flexibilité et une respiration minimale.
- L' élément pour les surfaces plantées par rapport des attribus de sa construction présent une haute résistance sous conditions climatiques, frappements et poinds lourds.

2. : L' élément pour les surfaces plantées de la réclamation 1, en plus se caractérise ce qui suit:
- l'élément peut se placer le même aux surfaces horisontales ou inclinées;
- après le placement des éléments et suivant le matériel planté, ou même le matériel dur (dalles, cailloux, bois), nous pouvons utiliser les espaces créés comme des surfaces accessibles ou pas;
- le parapet élastique augmente la capacité en volume des éléments en ce qui concerne le matériel de plantation;
- l'élément pour les surfaces plantées peut héberger une gamme des espèces botaniques : crassules, arbustes nains, plantes vivaces, herbes et arbustes aromatiques, plantes de couvrement de terre et gazons.
